# EUROPÄISCHE PATENTANMELDUNG

(11) **EP 1 215 592 A2**
(43) Veröffentlichungstag der Anmeldung: **19.06.2002**
(21) Anmeldenummer: 01129456.8
(22) Anmeldetag: 10.12.2001
(51) Int. Cl.: G06F 17/30

(54) **Verfahren zur Generierung von Objektidentifikationen, insbesondere bei Datenbanken**

(30) Priorität: 14.12.2000 DE 10064526
(71) Anmelder: Schumacher, Helmut, 70839 Gerlingen (DE)
(72) Erfinder: Schumacher, Helmut, 70839 Gerlingen (DE)
(74) Vertreter: Grunert, Marcus, Dipl.-Phys.

(57) **Zusammenfassung**

Die Erfindung betrifft die Generierung von Objektidentifikationen (OID) zur Bearbeitung, Verwaltung und Verknüpfung von Objekten zugeordneten Daten, wobei ein Objekt eindeutig durch einen natürlichen Schlüssel beschrieben wird, dem seinerseits eine Objektidentifikation zugeordnet wird. Es wird vorgeschlagen, aus dem das Objekt beschreibenden (natürlichen) Schlüssel (S1) mittels eines Hash-Algorithmus einen künstlichen Schlüssel zu erzeugen (S2) und als Objektidentifikation zu verwenden (S3). Dies erlaubt die direkte und schnelle Erzeugung eindeutiger OIDs ohne Verwendung von Lookup-Tabellen.

## Beschreibung

Die Erfindung betrifft ein Verfahren zur Generierung von Objektidentifikationen zur Bearbeitung, Verwaltung und Verknüpfung von Objekten zugeordneten Daten, wobei ein Objekt eindeutig durch einen eventuell zusammengesetzten, natürlichen und/oder künstlichen Schlüssel beschrieben wird, dem seinerseits eine Objektidentifikation zugeordnet ist. Weiterhin betrifft die Erfindung ein System zur Bearbeitung, Verwaltung und Verknüpfung von Objekten zugeordneten Daten mit Datenverarbeitungsmitteln zur Erzeugung von Objektidentifikationen und ein entsprechendes Computerprogramm (-produkt) zur Ausführung des Verfahrens.

Das genannte Verfahren bzw. System kommt bei der Implementierung eines sogenannten Data Warehouse oder Operational Data Store zur Anwendung. Hier tritt das Problem auf, alle Objekte (Zeilen in relationalen Datenbanken) mit eindeutigen Schlüsseln zu versehen. Derartige Schlüssel werden benötigt, um eindeutig auf ein Objekt und auf die diesem Objekt zugeordneten Daten zugreifen sowie verschiedene Daten verknüpfen zu können (beispielsweise bei Datenbankabfragen). So werden beispielsweise verschiedene Daten zu einer Objektgruppe je nach Datentyp in verschiedenen Datenbanken/Tabellen abgelegt. Zur Verknüpfung von zu einem Objekt gehörenden Daten aus verschiedenen solcher Tabellen muß in jeder Tabelle das Objekt und die zugehörigen Daten eindeutig identifizierbar sein. Hierzu können natürliche oder künstliche Schlüssel (Natural Keys bzw. Surrogate Keys) verwendet werden.

Ein natürlicher Schlüssel bezeichnet ein Objekt anhand von natürlichen Parametern, die das Objekt eindeutig kennzeichnen. Handelt es sich bei den Objekten um physikalische oder technische Systeme, so kann ein natürlicher Schlüssel aus den verschiedenen Zustandsvariablen des Systems zusammengesetzt sein. Objekte können aber auch Kunden, Verkaufsprodukte, Aktienoptionen und vieles andere mehr sein. Bei einer Aktienoption könnte der das Objekt bezeichnende Primärschlüssel aus vier natürlichen Komponenten zusammengesetzt sein: Optionstyp (Call, Put), Basisinstrument (Aktie), Verfallsmonat, Basispreis. Bei einer Messreihe zur Ermittlung der Härte von Werkstücken könnte ein zusammengesetzter natürlicher Schlüssel aus den Komponenten: Versuchstyp, Art des Werkstücks, Werkstückseigenschaften bestehen. Der Primärschlüssel dient zur eindeutigen Bezeichnung eines Objekts und zur Unterscheidung von anderen Objekten.

Als Alternative zu natürlichen Schlüsseln werden künstliche Schlüssel häufig bevorzugt eingesetzt. Jedem Objekt wird eine ID eindeutig zugeordnet. In einer Lookup-Tabelle werden die Zuordnungen der Objektidentifikationen (OID) zu den beispielsweise durch zusammengesetzte natürliche Schlüssel beschriebenen Objekten abgelegt. In den verschiedenen, Daten zu den Objekten enthaltenden Datenbanken/Tabellen können dann die das Objekt beschreibenden Schlüssel (bei zusammengesetzten Schlüsseln eine Spalte pro Komponente) durch die zugehörige Spalte von Objektidentifikationen ersetzt werden. Der OID wird somit zum Primärschlüssel der Stammdatendatei, der ein Objekt identifiziert. Soll ein neues Objekt in die Datenbank aufgenommen werden, wird zunächst die Lookuptable geladen und geprüft, ob dieses Objekt bereits vorhanden ist. Ist dies nicht der Fall, wird eine Objektidentifikation generiert (beispielsweise Integerwerte, die hochgezählt werden) und ein neuer Eintrag in der Lookup-Tabelle vorgenommen. Erst jetzt kann mit dem neuen Objekt weiterverfahren werden. Es muß jedoch sichergestellt sein, daß der Eintrag des neuen Objektes und seiner OID für das gesamte System (Unternehmen) eindeutig erfolgt, d.h. Doppelvergaben müssen ausgeschlossen sein. Hierzu muß nach jedem Insert ein Commit erfolgen, wodurch die neuen Werte endgültig auf Platte geschrieben werden, wonach erst andere Prozesse auf die geänderten Werte zugreifen können.

Diese Verfahrensweise ist sehr aufwendig, also zeit- und kostenintensiv.

Bei dem geschilderten Verfahren müssen zudem vor jeder Datenbankabfrage (Verknüpfung von Objekt-Daten aus verschiedenen Tabellen (Join)) die zugehörigen Objektidentifikationen aus der Lookup-Tabelle entnommen werden. Dieser Vorgang erhöht die Verarbeitungszeit erheblich.

Anstelle der zusammengesetzten natürlichen Schlüssel können auch vorgegebene IDs verwendet werden (z. B. Wertpapierkennzahl, Kundennummer, etc.). Hierbei treten jedoch häufig praktische Probleme auf, da diese IDs häufig zur eindeutigen Kennzeichnung nicht ausreichen und dann durch zusätzliche künstliche Nummern ergänzt werden müssen. Häufig sind solche IDs auch historisch bedingt und müssen einer Änderung unterworfen werden, wenn sie den aktuellen Bedürfnissen nicht mehr entsprechen. Zur Vereinfachung greift man deshalb auch hier auf künstlich erzeugte OIDs zurück.

Als Objektidentifikationen werden entweder Integerwerte verwendet, die durch Hochzählen oder durch Generierung von Zufallszahlen entstehen, oder es werden Time Stamps oder Funktionen hiervon eingesetzt. Grundsätzlich verlangen diese Methoden die Implementierung von Table-Lookup-Verfahren, die die Relation zwischen natürlichen und künstlichen Schlüsseln widerspiegeln. Hiermit ist ein großer Overhead verbunden, der sich bei der Generierung der OIDs sowie bei Datenbankabfragen geschwindigkeitsbeschränkend und kostensteigernd auswirkt.

Aufgabe der vorliegenden Erfindung ist daher, ein Verfahren zur Generierung von Objektidentifikationen bei Systemen der oben beschriebenen Art anzugeben, das unter Vermeidung der oben genannten Nachteile Neueinträge und Abfragen bei Datenbanken in kürzerer Zeit als bisher ermöglicht.

Diese Aufgabe wird durch die Merkmale des Patentanspruchs 1 gelöst. Ein erfindungsgemäßes System zur Umsetzung des Verfahrens ist durch Anspruch 5 gegeben. Das Verfahren läßt sich durch ein Computerprogramm nach Anspruch 6 ausführen. Vorteilhafte Ausgestaltungen ergeben sich aus den jeweiligen Unteransprüchen und der nachfolgenden Beschreibung.

Erfindungsgemäß wird aus dem das Objekt beschreibenden Schlüssel mittels eines Hash-Algorithmus ein künstlicher Schlüssel erzeugt, der als Objektidentifikation verwendet wird. Beispielsweise wird also aus einem zusammengesetzten natürlichen Schlüssel ein Hash-Code erzeugt und als OID verwendet. Es kann aber auch aus einem zusammengesetzten natürlichen und künstlichen Schlüssel oder aus einem rein künstlichen Schlüssel mittels eines Hash-Algorithmus ein neuer künstlicher Schlüssel erzeugt werden, der als erfindungsgemäße Objektidentifikation eingesetzt wird.

Hash-Algorithmen werden häufig im Bereich der digitalen Signatur eingesetzt, um Dokumente variabler Länge in einen Hash-Code zu verwandeln, der den Inhalt des Dokuments in komprimierter und nicht rückrechenbarer Form wiedergibt. Der Hash-Code ist dann der Eingangswert für die digitale Signatur. Vorteile der Hash-Algorithmen sind der große Durchsatz, d. h. die schnelle Verarbeitung großer Datenmengen, und die Kollisionsresistenz, d. h. zu einem vorgegebenen Eingangsstring (-dokument) kann kaum ein zweiter veränderter String (Dokument) gefunden werden, der den gleichen Hash-Code besitzt. Beispiele für Hash-Algorithmen sind MD5 (Eingangsblöcke der Größe 512 Bit, Länge des Hash-Codes 128 Bit), der genormte ISO/IEC 10 118-2 oder SHA-1, als FIPS 180-1 genormt (Eingangsblöcke der Größe 512 Bit, Hash-Code-Länge 160 Bit). In der Praxis können natürliche Schlüssel beliebiger (Eingangs-)Länge kodiert werden.

Vorteilhaft ist, daß die Hash-Codes feste Längen besitzen, so daß die erfindungsgemäßen Objektidentifikationen ebenfalls feste Längen aufweisen. Die bevorzugte Länge, von der auch der bevorzugte Hash-Algorithmus abhängt, kann daran bemessen werden, daß bei einer geforderten durchschnittlichen oder maximalen Anzahl von generierten Objektidentifikationen die Wahrscheinlichkeit für das Auftreten von Kollisionen derart gering wird, daß in der Praxis nicht damit zu rechnen ist, daß gleiche OIDs für unterschiedliche Objekte berechnet werden. Selbstverständlich können für das erfindungsgemäße Verfahren auch eigens Hash-Algorithmen entworfen werden, die einen Hash-Code der gewünschten Länge erzeugen.

Es hat sich als vorteilhaft erwiesen, als Hash-Algorithmus SHA-1 zu verwenden. Es läßt sich abschätzen, daß bei einer Generierung von 10¹⁰ OIDs im Jahr eine Kollision im Schnitt alle 10¹⁴ Jahre auftritt. Diese Wahrscheinlichkeit ist derart gering, daß man mit an Sicherheit grenzender Wahrscheinlichkeit von einer eindeutigen Zuordnung des als OID verwendeten Hash-Codes zu einem Objekt sprechen kann.

Diese eindeutige Zuordnung eines Objektes zu seiner erfindungsgemäßen Objektidentifikation macht es möglich, auf alle Lookup-Tabellen zu verzichten. Erfindungsgemäß wird aus dem Objekt selbst sein OID erzeugt, die herkömmliche eigene Generierung von OIDs und anschließende Zuordnung der OIDs zu ihren Objekten kann somit entfallen. Auch bei Datenbankabfragen kann auf zeitaufwendige Abfragen von natürlichen Schlüsseln bzw. auf ein Table-Lookup-Verfahren zur Ermittlung der zugehörigen Objektidentifikation verzichtet werden. Dies hat sich als enorm zeitsparend erwiesen, so daß der Nachteil des in der Regel erhöhten Speicherplatzbedarfs (im Vergleich zur Verwendung von z. B. Integerwerten als OIDs) kaum mehr ins Gewicht fällt.

Die Generierung einer Objektidentifikation mittels SHA-1 kann in einem konkreten Beispielsfall innerhalb von 20 Mikrosekunden stattfinden, was Zugriffszeiten auf eine Lookup-Tabelle deutlich unterschreitet.

Ein erfindungsgemäßes System zur Bearbeitung, Verwaltung und Verknüpfung von Objekten zugeordneten Daten enthält Datenverarbeitungsmittel zur Erzeugung einer dem das Objekt beschreibenden Schlüssel zugeordneten Objektidentifikation, wobei erfindungsgemäß diese Datenverarbeitungsmittel eine Recheneinheit aufweisen, um aus dem das Objekt beschreibenden Schlüssel mittels eines Hash-Algorithmus einen künstlichen Schlüssel als Objektidentifikation zu erzeugen. Ein erfindungsgemäßes Computerprogramm enthält Programmcode-Mittel, um das erfindungsgemäße Verfahren auszuführen, wenn das Programm auf einem Rechner, insbesondere der Rechnereinheit des erfindungsgemäßen Systems abgearbeitet wird. Das Programm kann auf verschiedenen Speichermedien, wie EE-PROMs, Flashmemories, aber auch CD-ROMs, Disketten oder Festplattenlaufwerken, gespeichert sein.

Die Rechnereinheit des erfindungsgemäßen Systems errechnet mittels des erwähnten Computerprogramms (auch eine Hardware-Lösung wäre denkbar) aus einem Eingangsdatenstrom, der die das Objekt beschreibenden Schlüssel enthält, den zugehörigen Hash-Code, der als Objektidentifikation ausgegeben wird.

Im folgenden sollen anhand der beigefügten Figuren Ausführungsbeispiele die Erfindung und ihre Vorteile näher erläutern.
- Figur 1: zeigt ein Datenflussdiagramm zum Erzeugen und zum Laden von Objektidentifikationen (OID) nach herkömmlicher Art.
- Figur 2: zeigt ein Datenflussdiagramm zum erfindungsgemäßen Generieren von Objektidentifikationen.
- Figur 3: zeigt das Datenmodell für eine Messreihe mit Messwerten eines Werkstücks zur Schilderung einer Anwendung der Erfindung.

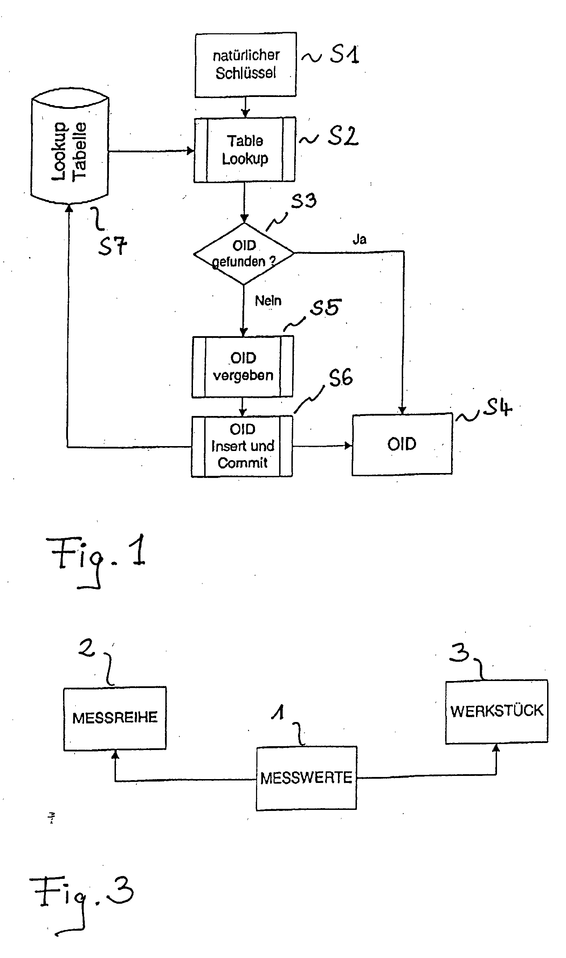

In Figur 1 sind schematisch die Schritte (S1 - S7) skizziert, die bei einem herkömmlichen Verfahren durchlaufen werden müssen, um eine Objektidentifikation (OID) zu laden oder neu zu erzeugen. Es soll von einem natürlichen zusammengesetzten Schlüssel ausgegangen werden, der ein bestimmtes Objekt (beispielsweise Aktienoption oder ein Werkstück) eindeutig identifiziert und von anderen Objekten unterscheidet. Ein solcher Primärschlüssel könnte bei einer Aktienoption aus vier natürlichen Komponenten zusammengesetzt sein: Optionstyp (Call, Put), Basisinstrument (Aktie), Verfallsmonat, Basispreis. Bei einem Werkstück, das einer Messreihe unterzogen wird, könnte der zusammengesetzte natürliche Schlüssel aus der Werkstücksbezeichnung, dem Fertigungsdatum sowie weiteren Parametern, wie Typbezeichnung, Hersteller, Name des Endprüfers, etc., bestehen.

Soll nun das durch seinen natürlichen Schlüssel bezeichenbare Objekt durch eine Datenbankabfrage aufgefunden oder in die Datenbank aufgenommen werden, muß zunächst der natürliche Schlüssel des Objekts aufgestellt (S1) und einem Table-Lookup-Verfahren eingegeben werden (S2). Eine bestehende Lookup-Tabelle wird nach dem natürlichen Schlüssel durchsucht und die zugehörige OID ermittelt (S3). Befindet sich in der Lookup-Tabelle ein entsprechender Eintrag, so wird die zum natürlichen Schlüssel gehörende OID ausgelesen und für nachfolgende Datenbankabfragen weiterverwendet (S4).

Falls keine zum eingegebenen natürlichen Schlüssel gehörende OID aus der Lookup-Tabelle ermittelt werden kann, muß eine neue OID vergeben werden (S5). Die neue OID kann beispielsweise in einfacher Weise durch Hochzählen eines Integerwertes generiert werden. Damit die neu erzeugte Objektidentifikation (OID) im gesamten System beispielsweise eines Unternehmens zur gleichen Zeit zur Verfügung steht und Doppelvergaben ausgeschlossen werden, muß nach dem Insert (Einfügen eines neuen Objektes) eine Commit erfolgen (S6), wodurch die neuen Werte endgültig auf Platte geschrieben werden. In die Lookup-Tabelle werden somit der natürliche Schlüssel des hinzugefügten Objekts und seine neu erzeugte OID eingetragen (S7).

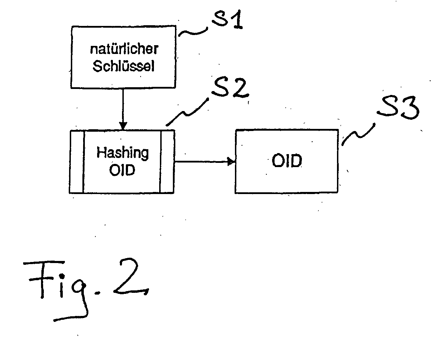

Wie in Figur 2 dargestellt, lässt sich der geschilderte, aufwendige Vorgang durch die Erfindung beträchtlich abkürzen. Zu dem natürlichen Schlüssel eines Objekts wird automatisch immer der zugehörige Hash-Code erzeugt (S1, S2). Dieser Hash-Code stellt erfindungsgemäß die Objektidentifikation (OID) des Objektes dar (S3), die für Datenbankabfragen oder das Beschreiben einer Datenbank/Tabelle mit dem Objekt zugeordneten Daten verwendet wird.

Bei Verwendung des Hash-Algorithmus SHA-1 mit einem natürlichen Schlüssel einer Eingangslänge von 512 Bit kann in diesem Fall innerhalb von 20 Mikrosekunden eine OID der Länge 160 Bit (20 Byte) erzeugt werden. Dies erhöht die Verarbeitungsgeschwindigkeit im Vergleich zum herkömmlichen Verfahren gemäß Figur 1 erheblich.

Anhand von Figur 3 soll eine einfache Anwendung der Erfindung im Zusammenhang mit einer Messreihe mit Messwerten eines Werkstücks erläutert werden. Mit 1 sind die Messwerte einer Messreihe 2 bezogen auf ein Werkstück 3 bezeichnet. Die Parameter für die Messreihe 2 und das Werkstück 3 sind in den Entitäten/Tabellen MESSREIHE und WERKSTÜCK separat abgelegt (Normalisierung). Jede Messreihe hat einen zugeordneten OID als Primärschlüssel, gleiches gilt für die Messwerte und die Werkstücke. Als Fremdschlüssel treten als Spalten der Entität MESSWERTE die OIDs der zugehörigen Messreihe (OIDMR) und des Werkstückes (OIDWS) auf.

Ein möglicher Aufbau der Tabellen ist wie folgt (Angabe der Spalten):

### a) MESSWERTE:

OID
Datum
Zeitpunkt
WERT (Gemessener Wert)
Zustand
OIDMR (OID der MessReihe)
OIDWS (OID des Werkstückes)

### b) MESSREIHE:

OID
Bezeichnung
Beginn
Ende
Durchgeführt von ...
Weitere Parameter

### c) WERKSTÜCK:

OID
Bezeichnung
Gefertigt am ...
Geprüft durch ...
Weitere Parameter

Durch eine Datenbankabfrage (Query) sollen alle Messungen selektiert werden, die einen bestimmten Zustand xxx ergaben. Ausgegeben werden sollen neben dem gemessenen Wert (aus der Tabelle MESSWERTE) einige weitere zugehörige Parameter, nämlich Datum und Zeitpunkt der Messwerte, Bezeichnung des Werkstücks sowie Beginn und Bezeichnung der Messreihe. Diese Query lässt sich wie folgt darstellen:
Select MR.Bezeichnung, MR.Beginn, WS.Bezeichnung, MW.Datum, MW.Zeitpunkt, MW.Wert
From MESSWERTE MW, MESSREIHE MR, WERKSTÜCK WS
Where MW.Zustand = xxx and
   MW.OIDMR = MR.OID and
   MW.OIDWS = WS.OID

Alle Schlüssel sind über erfindungsgemäße OIDs realisiert. Diese OIDs werden aus den entsprechenden natürlichen Schlüsseln oder aus einer Kombination von natürlichen Schlüsseln und OIDs (Fremdschlüssel) erzeugt. Eventuelle natürliche Schlüssel treten als Attribute in den Tabellen auf.

Ein weiteres Beispiel für die Anwendung der Erfindung sind die bereits oben genannten Aktienoptionen, die in einer Datenbank beispielsweise in den folgenden drei Tabellen vorliegen:
KURSE (Kurse der Optionen)
TRANSAKT (Transaktionen, wie Käufe/Verkäufe)
POSITIONEN (offene Positionen in Depots)

Die Spalten dieser Tabellen lauten bei Verwendung von OIDs wie folgt:

### a) KURSE

**OptionsOID**
*OptionsTyp*
*Basisinstrument*
*Verfallsmonat*
*Basispreis*
AktuellerKurs
DatumAktuellerKurs

Der OptionsOID ist der Primärschlüssel der Tabelle und identifiziert eine Option. Der natürliche Schlüssel stellt hierbei lediglich Attribute der Tabelle dar.

### b) TRANSAKT

**TransaktionsId**
DatumTransaktion
KaufVerkauf
*OptionsOID*
Anzahl
BezahlterPreis
Kommission
Etc.

Der OptionsOID tritt als Fremdschlüssel auf. Der TransaktionsId ist der Primärschlüssel der Tabelle.

### c) POSITIONEN

**Depotnummer**
*OptionsOID*
Anzahl
Erfolg
Etc.

Der OptionsOID tritt als Fremdschlüssel auf. Die Depotnummer ist der Primärschlüssel der Tabelle.

Die Ermittlung der aktuellen Kurse zu allen Positionen eines Depots kann als folgende Query formuliert werden:
select K.AktuellerKurs from KURSE K, POSITIONEN P
where P.OptionsOID = K.OptionsOID

Die OptionsOIDs sind auch hier aus dem vierkomponentigen natürlichen Schlüssel (Optionstyp, Basisinstrument, Verfallsmonat, Basispreis), z. B. (C, Bayer, Dez. 00, 40.00), durch Anwendung des Hash-Algorithmus SHA-1 generiert und 20 Byte groß.

Die Erfindung gewährleistet die direkte und schnelle Erzeugung eindeutiger Objektidentifikationen und gleichzeitig daraus resultierende hohe Zugriffs- und Verarbeitungsgeschwindigkeiten bei Datenbankabfragen.

## Patentansprüche

1. Verfahren zur Generierung von Objektidentifikationen zur Bearbeitung, Verwaltung und Verknüpfung von Objekten zugeordneten Daten, wobei ein Objekt eindeutig durch einen eventuell zusammengesetzten, natürlichen und/oder künstlichen Schlüssel beschrieben wird, dem seinerseits eine Objektidentifikation zugeordnet wird,
**dadurch gekennzeichnet,**
**daß** aus dem das Objekt beschreibenden Schlüssel mittels eines Hash-Algorithmus ein künstlicher Schlüssel erzeugt und als Objektidentifikation verwendet wird.

2. Verfahren nach Anspruch 1, **dadurch gekennzeichnet, daß** die als Objektidentifikationen erzeugten künstlichen Schlüssel eine feste Länge besitzen.

3. Verfahren nach Anspruch 1 oder 2, **dadurch gekennzeichnet, daß** die Länge der erzeugten künstlichen Schlüssel derart bemessen wird, daß die Wahrscheinlichkeit für das Auftreten von nicht eindeutigen Zuordnungen zwischen erzeugtem künstlichen Schlüssel und dem das Objekt beschreibenden Schlüssel abhängig von der durchschnittlichen Anzahl der generierten Objektidentifikationen hinreichend gering wird.

4. Verfahren nach einem der Ansprüche 1 bis 3, **dadurch gekennzeichnet, daß** als Hash-Algorithmus die SHA-1-Methode verwendet wird, wobei Objektidentifikationen einer Länge von 20 Bytes generiert werden.

5. System zur Bearbeitung, Verwaltung und Verknüpfung von Objekten zugeordneten Daten, insbesondere in Datenbanken, wobei ein Objekt eindeutig durch einen eventuell zusammengesetzten, natürlichen und/oder künstlichen Schlüssel beschrieben ist, mit Datenverarbeitungsmitteln zur Erzeugung einer dem das Objekt beschreibenden Schlüssel zugeordneten Objektidentifikation, **dadurch gekennzeichnet, daß** die Datenverarbeitungsmittel eine Recheneinheit aufweisen, um aus dem das Objekt beschreibenden Schlüssel mittels eines Hash-Algorithmus einen künstlichen Schlüssel als Objektidentifikation zu erzeugen.

6. Computerprogramm mit Programmcode-Mitteln, um ein Verfahren gemäß einem der Ansprüche 1 bis 4 auszuführen, wenn das Computerprogramm von einem dafür vorgesehenen Computer, insbesondere der Recheneinheit gemäß Anspruch 5, abgearbeitet wird.

7. Computerprogramm-Produkt mit Programmcode-Mitteln, die auf einem computerlesbaren Datenträger gespeichert sind, um ein Verfahren nach einem der Ansprüche 1 bis 4 durchzuführen, wenn das Computerprogramm auf einem Computer oder einer entsprechenden Rechnereinheit, insbesondere einer Recheneinheit nach Anspruch 5, ausgeführt wird.
